# EUROPEAN PATENT SPECIFICATION

(11) **EP 2 190 309 B1**
(45) Date of publication and mention of the grant of the patent: **25.03.2015**
(21) Application number: 08785783.5
(22) Date of filing: 01.09.2008
(51) Int. Cl.: A23L 3/16, A23L 3/22, A23L 1/01, A23L 1/212, A23L 1/29

(54) **PROCESS FOR PRODUCING INFANT FOOD PRODUCTS**
VERFAHREN ZUR HERSTELLUNG VON KLEINKINDERNAHRUNG
PROCÉDÉ DE PRODUCTION DE PRODUITS ALIMENTAIRES POUR NOUVEAUX-NÉS

(30) Priority: 07.09.2007 EP 07017564
(43) Date of publication of application: 02.06.2010
(73) Proprietor: Nestec S.A., 1800 Vevey (CH)
(72) Inventor: HUTSCHENREUTHER, Simon, 78239 Rielasingen (DE); KUSLYS, Martinas, CH-3506 Grosshochstetten (CH); RÄDLER, Thomas, CH-8706 Meilen (CH); REINL, Hubert, 84577 Tüssling (DE); WEBER, Frank, 65760 Eschborn (DE)
(74) Representative: Rupp, Christian
(86) International application number: PCT/EP2008/007135
(87) International publication number: WO 2009/030452

(56) References cited:
- EP-A- 1 346 650
- WO-A-2006/029298
- US-A- 4 640 840
- US-A- 5 814 363
- US-B1- 6 676 986
- DATABASE FSTA INTERNATIONAL FOOD INFORMATION SERVICE (IFIS), FRANkFURT-MAIN, DE; Elelmezesi Ipar 1979, GASZTONYI M, HORVATH D: "Changes in the vitamin C content of fruit-containing baby foods during processing" XP002462981 Database accession no. 80-2-06-g0429

## Description

### BACKGROUND OF THE INVENTION

### Field of the Invention

The present invention relates generally to a process for producing infant food products and particularly to an aseptic process for producing infant food products in which each ingredient is processed to the minimum extent necessary so that distinctive natural colours and natural tastes of the ingredients are retained after processing.

### Description of Related Art

Exclusive breastfeeding during the first six months of life is considered the best way of providing ideal nutrition for healthy growth and development of infants. Breastfeeding also strengthens an infant's immune system, reducing the incidence and severity of infectious diseases.

Some mothers cannot breastfeed, while others, for personal, cultural, socio-economic or health reasons, choose not to. In these cases, the World Health Organisation (WHO) states that mothers should be supported in optimising their infant's nutrition.

### Infant Formula

The WHO/Food and Agricultural Organisation of the United Nations (FAO) Codex Alimentarius Commission, the UN body that sets international standards for foods, recognises that infant formula is the best substitute for breast milk. While industrially prepared infant formula cannot replicate exactly all the qualities of breast milk, it represents a considerable improvement over traditional substitutes that may be nutritionally inadequate and unsafe. These include unmodified animal milk (from cows, goats or buffaloes) and various types of cereal gruel.

Industrially prepared infant formula has been designed for use from birth as a partial or total replacement for breast milk. The Codex Alimentarius defines it as "a product based on milk of cows or other animals and/or other edible constituents of animal, including fish, or plant origin, which have proved to be suitable for infant feeding." When used as the sole source of nourishment, infant formula must meet all the energy and nutrient requirements of infants during the first six months of life.

### Complementary Foods

After an initial six months of exclusive breastfeeding, infants should start receiving nutritionally adequate, safe and appropriate complementary foods.

Complementary foods are used for weaning and they can be defined as "any food, whether manufactured or locally prepared, suitable as a complement to breast milk or to infant formula, when either becomes insufficient to satisfy the nutritional requirements of the infant." They include, for example, milk products, home made foods and processed foods based on cereals, fruits, vegetables, meat, fish and carbohydrates.

Complementary foods should be introduced into an infant's diet when breast-milk or a breast-milk substitute no longer satisfies the infant's nutritional requirements. During this transition period, as the infant's digestive system develops, the infant's diet can gradually evolve from an exclusive milk diet to a fully diversified diet similar to that of adults.

Different tastes and textures can be progressively introduced into the diet, for example through cereals mixed with the infant's usual milk or puréed fruit and vegetables, meat and fish. Later, increasingly solid foods can be added.

Many mothers, prepare complementary foods at home. It is highly unlikely, however, that these foods will supply all the calories, iron and other micronutrients needed by infants aged 6-24 months. In light of this, food manufacturers have developed calorie-optimised complementary foods enriched with micronutrients to meet these requirements. They include protein, carbohydrate and fat in varying amounts.

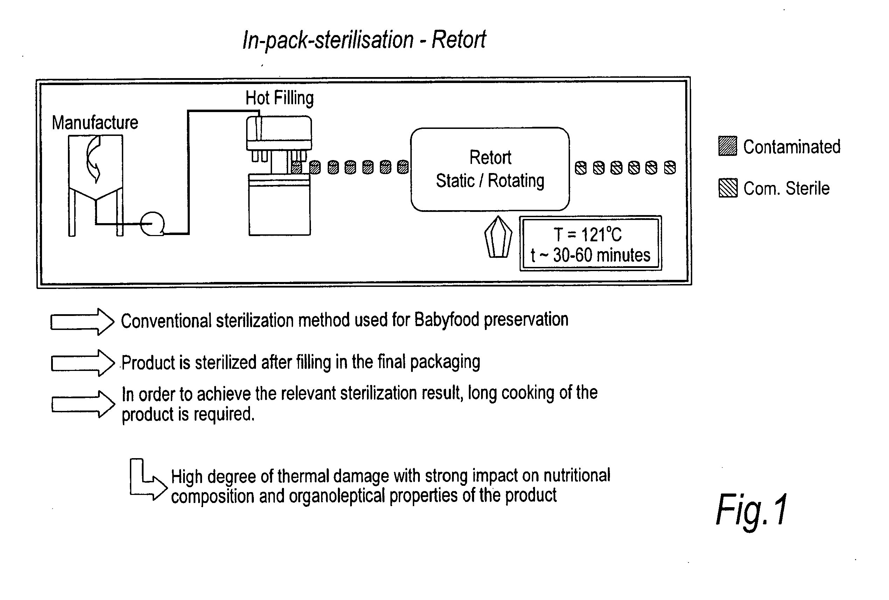

Conventionally, in order to ensure product sterility over the shelf-life of infant food products the known food products are produced by a process wherein the ingredients are sealed in small containers (typically glass jars) within the cooking vessel under pressure and high temperature for a prolonged period until the required sterility is reached. However, this process can cause loss or degradation of heat-sensitive nutrients. A schematic showing a conventional process of sterilization is illustrated in figure 1.

The traditional cooking techniques, for example retorting, sterilize foods but at the cost of losing nutrients, taste quality and visual properties. Retorting accelerates to some extent destruction of heat-labile nutrients, including vitamin C, beta-carotene, thiamin, and polyunsaturated fatty acids in the presence of residual oxygen. Taste qualities are also lost during retorting as sugars are destroyed and bitter or sour tastes (eg a canned food taste) are introduced as a result of complex chemical reactions. Retorting also results in the problem of a loss of colour from the product reducing the product's visual appeal. Another process of the prior art is described in EP 1346 650.

In addition, it is considered that infants need foods rich in essential nutrients and they should not be exposed to harmful compounds that may be generated by cooking during processing.

Thus, there is a need for a new process for producing a range of food products that results in the products having more natural tastes and more nutrients retained after processing.

### SUMMARY OF THE INVENTION

It is, therefore, an object of the invention to provide a new process for producing a range of food products that results in the products having more natural tastes and more nutrients retained after processing.

These and other objects are addressed in one aspect of the invention by providing a process for producing an infant food product comprising a protein ingredient and a vegetable ingredient, the process comprising in a first stage, the step of separately cooking vegetables and separately cooking meat or fish to provide pre-cooked ingredients, and in a second stage, the pre-cooked ingredients are mixed and after mixing, are submitted to UHT processing at a high temperature for a short time to sterilize the product. The product is aseptically filled into containers thereafter.

Preferably, separate cooking of the vegetables is achieved by subjecting frozen vegetables to steam to defrost them quickly and at the same time 'gently' cook them. Advantagously, this results in minimal destruction of the plant cell structure, minimal adverse chemical reactions and reduced leaching of water soluble vitamins.

Preferably, separate cooking of the meat or fish is achieved by frying the meat or fish.

In addition, by pre-cooking the vegetables, and frying the meat or fish separately, their own distinct flavour profiles are generated / achieved. Combining them to produce the final product before UHT processing provides the added benefit of improving the taste profile of the product.

Sterilisation of the food product is achieved by UHT (Ultra High Temperature) processing which (because the high temperature treatment is carried out for a short time) causes minimal vitamin loss and minimal chemical reactions of heat-sensitive chemical compounds in the food product. Advantagously, the loss of heat-sensitive vitamins and generation of reaction products has been found to be significantly less following the process of the invention compared to the traditional retorting process typically used for production of infant food products. Furthermore, the invention provides the advantage of intense retention of flavours and tastes from the individual ingredients used. The range of products produced according to the invention have a range of distinct tastes and they taste less like stew.

It has been found that the new approach to cooking and sterilizing the food product according to the invention subjects the components of the food to a milder heat treatment. In addition, vegetables are cooked separately from the other ingredients, allowing individualized cooking times according to the types of vegetable present. This provides the advantage that merging of flavours is prevented during early processing.

In addition, the cooking technique of the invention preserves vegetable tastes and nutrient content, and UHT heat treatment minimizes cooking time so that sterility is achived, but chemical reactions which occur in the food during processing are minimized.

Furthermore, results of sensory analysis and vitamin analysis tests have revealed that the process of the invention retains individual flavours of the ingredients. In addition, the invention provides the advantage that the natural sweetness of the ingredients used is retained, sour flavours are not introduced during processing, higher levels of thiamin are maintained after processing, polyunsaturated fatty acids are maintained, and development of complex chemical compounds during processing is minimised.

In addition, the invention provides the advantage that the process provides a healthier product than a comparative product produced by conventional retorting.

Other and further objects, features, and advantages of the present invention will be readily apparent to those skilled in the art.

### BRIEF DESCRIPTION OF THE DRAWINGS

Figure 1 illustrates a conventional process for producing and sterilizing a food product comprising retorting.
Figure 2 illustrates a process for producing and sterilizing a range of food products according to the invention. In contrast to the conventional process, the process of the invention comprises UHT treatment and aseptic filling.
Figure 3 illustrates the results of a study carried out to investigate the retention of Vitamin B1 before and after processing various food products.
Figure 4 illustrates the results of a study carried out to investigate the cooking value at various F0 values and compares the results of processing according to the invention against a conventional method involving retorting.
Figure 5 illustrates the results of a study carried out to investigate the level of furan measured in each of three different products after subjecting the product to thermal processing involving conventional retorting and processing according to the invention.
Figures 6 and 7 illustrate the results of a study carried out to investigate the concentration of furan produced as by-products at three levels of heat treatment. A vegetable product including carrots and a savoury product including cod and mixed vegetables were evaluated and the results are shown in Figures 6 and 7 respectively.
Figure 8 illustrates the results obtained in a Lab color space diagram.

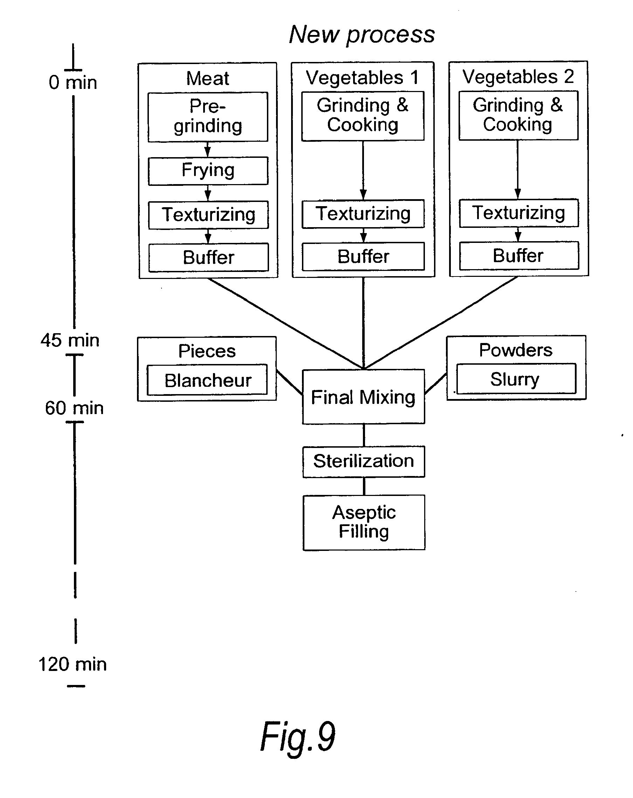

Figure 9 illustrates a schematic showing an embodiment of a process according to the invention.
Figure 10 illustrates the results of a sensory profiling study carried out to investigate the difference in taste of a product after subjecting the product to thermal processing involving conventional retorting and processing according to the invention.

### DETAILED DESCRIPTION OF THE INVENTION

### Definitions

Within the context of this specification, the term "about" means plus or minus 20%, more preferably plus or minus 10%, even more preferably plus or minus 5%, most preferably plus or minus 2%.

The term "range of infant food products" refers to a plurality of packaged nutritional compositions (eg one or more, preferably two or more) that, together with milk, and/ or cereals provide the nutritional requirements an infant. The range could be interpreted to form a kit of parts.

There are recognized stages of infant development that can be defined, wherein Stage 1 refers to about 4 to about 6 months of age; Stage 2 refers to about 6 to about 8 months of age, Stage 3 refers to about 8 to about 12 months of age, and Stage 4 (also referred to as Junior Stage) refers to about 12 to about 36 months of age. Infants falling within these different developmental stages have different nutritional requirements.

As used herein and in the appended claims, the singular forms "a," "an," and "the" include plural reference unless the context clearly dictates otherwise.

Unless defined otherwise, all technical and scientific terms and any acronyms used herein have the same meanings as commonly understood by one of ordinary skill in the art in the field of the invention.

All percentages for weights expressed herein are by weight of the total food product unless specifically stated otherwise.

### The Invention

In one aspect, the invention provides a process for producing an infant food product comprising a protein ingredient and a vegetable ingredient wherein, in a first stage, a vegetable ingredient is cooked, and a protein ingredient is cooked separately from the vegetable ingredient to provide pre-cooked ingredients, and in a second stage, the pre-cooked ingredients are mixed and submitted to UHT processing at a temperature of about 130°C to about 140°C for a time of about 30 seconds to about 240 seconds to sterilize the product.

Preferably, the vegetable ingredient comprises at least one, vegetable. More preferably, the vegetable ingredient comprises at least two or three vegetables.

Preferably, separate cooking of the vegetable ingredient is achieved by subjecting frozen or fresh vegetables to steam treatment. This provides the advantage that if the vegetables are frozen, they are defrosted quickly. In addition, nutrients are not leached from the vegetables. Furthermore, advantageously, the vegetables are subjected to steam treatment for a time depending on the vegetable used.

Preferably, at least two varieties of vegetables are cooked separately from each other and mixed after cooking.

Preferably, the vegetables are cooked for a time of about 1 minute to about 5 minutes at about 85°C to about 95°C. This has the advantage of 'gently' cooking the vegetables. Advantagously, this results in minimal destruction of the plant cell structure, minimal adverse chemical reactions and reduced leaching of water soluble vitamins.

Preferably, the protein ingredient comprises a source of protein selected from meat and fish.

By separately cooking the vegetable ingredients, and the meats, the meats can be fried to generate the meat flavours and the vegetables cooked separately to avoiding the blending of vegetable flavours, giving more intense flavours and reducing nutrient losses.

Preferably, separate cooking of the meat or fish is achieved by frying or pressure-cooking the meat or fish. In one embodiment, meat is fried together with onions.

Preferably the meat or fish is fried or pressure-cooked for about 10 minutes.

Preferably, the meat or fish is fried for a time depending on the meat or fish used. This is advantageous because the frying time can be tailored to provide the best result for the meat or fish used. In addition, in contrast to the traditional retorting process, the meat or fish flavour is not mixed with vegetable flavours until after the vegetables have been cooked.

In a preferred embodiment of the invention, a pasta or a cereal based ingredient, eg rice, is cooked separately from the vegetable ingredient and the protein ingredient, and it is mixed or used as a bed or base for the pre-cooked ingredients.

Preferably, the infant food products for infants from about 4 to about 6 months of age (Stage 1) comprise one or more vegetables selected from artichoke, carrot, cucumber, fennel, French bean, leek, lettuce, parsnip, potato, pumpkin, squash and zucchini.

Preferably, infant food products for infants from about 4 to about 6 months of age (Stage 1) comprise one or more meats selected from beef, veal, chicken, lamb, pork, turkey and duck.

Preferably, infant food products for infants from about 4 to about 6 months of age (Stage 1) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant and watermelon.

Preferably, infant food products for infants from about 4 to about 6 months of age (Stage 1) comprise one or more aromatic herbs and spices selected from anise, balm mint, chamomile, caraway, gherkin, orange blossom and sorrel.

Preferably, infant food products for infants from about 6 to about 8 months of age (Stage 2) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea and spinach.

Preferably, infant food products for infants from about 6 to about 8 months of age (Stage 2) comprise one or more legumes selected from soy, black gram seed, chickpea, cowpea, kidney bean, lentil, mung bean and pigeon pea.

In another embodiment, infant food products for infants from about 6 to about 8 months of age (Stage 2) comprise one or more meats selected from of beef, veal, chicken, lamb, pork, turkey and duck, and/or fish.

Preferably, infant food products for infants from about 6 to about 8 months of age (Stage 2) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry and tangerine.

Preferably, infant food products for infants from about 6 to about 8 months of age (Stage 2) comprise one or more aromatic herbs and spices selected from anise, balm mint, chamomile, caraway, gherkin, orange blossom, sorrel, cardamom, chives, cumin, onion, saffron, savory, shallot and thyme.

Preferably, infant food products for infants from about 6 to about 8 months of age (Stage 2) comprise coconut.

Preferably, infant food products for infants from about 8 to about 12 months of age (Stage 3) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish and turnip.

Preferably, infant food products for infants from about 8 to about 12 months of age (Stage 3) comprise one or more legumes selected from soy, black gram seed, chickpea, cowpea, kidney bean, lentil, mung bean, pigeon pea, lima bean and winged bean.

Preferably, infant food products for infants from about 8 to about 12 months of age (Stage 3) comprise one or more meats selected from beef, veal, chicken, lamb, pork, turkey and duck, and/or fish and/or eggs.

Preferably, infant food products for infants from about 8 to about 12 months of age (Stage 3) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine and rhubarb.

Preferably, infant food products for infants from about 8 to about 12 months of age (Stage 3) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint and vanilla.

Preferably, infant food products for infants from about 8 to about 12 months of age (Stage 3) comprise coconut and/or cocoa.

Preferably, it is preferred that infant food products for infants from about 12 to about 36 months of age (Stage Junior) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish, turnip, mushroom and watercress.

Preferably, infant food products for infants from about 12 to about 36 months of age (Stage Junior) comprise one or more legumes selected from soy, black gram seed, chickpea, cowpea, kidney bean, lentil, mung bean, pigeon pea, lima bean and winged bean.

Preferably, infant food products for infants from about 12 to about 36 months of age (Stage Junior) comprise one or more meats selected from beef, veal, chicken, lamb, pork, turkey, duck, and/or fish, and/or eggs and/or crustaceans.

Preferably, infant food products for infants from about 12 to about 36 months of age (Stage Junior) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine, rhubarb, grapefruit and kiwi.

Preferably, infant food products for infants from about 12 to about 36 months of age (Stage Junior) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint, vanilla, basil, bay laurel, chervil, cinnamon, clove, ginger, liquorice, mace, marjoram, nutmeg, oregano, parsley, pepper, rosemary, sage and terragon.

Preferably, infant food products for infants from about 12 to about 36 months of age (Stage Junior) comprise one or more nuts selected from coconut, cocoa, almond, beechnut, brazil nut, cashew nut, chestnut, hazelnut, macadamia nut, pecan nut, pistachio nut and walnut.

The process additionally includes sterilizing packaging (aseptic filling technology) for the food product and filing the packaging with the food product under an aseptic environment. Advantagously, the filled packaging is not subjected to high heat treatment with the product and packaging does not take place at high temperature. This process is ideally suited for new packaging materials such as plastics (eg polypropylene). This provides the advantage that glass containers are not required-migration from the seal between the glass and the cap to the food product is reduced and the risk of glass splinters being introduced to the food product is removed. In addition, the packaging material is easy to sterilize. In particular, the removal of hydrogen peroxide is difficult to achieve in preformed containers.

Preferably, the containers for the food product are produced in the same production line as the food product so that the production of the containers for the food product is an integral part of the process. This provides the advantage that the containers are formed just prior to filling with food product and the risk of contamination is reduced.

In a further aspect, a range of infant food products produced according to the invention, is disclosed.

Preferably, the range of products comprises at least one food product suitable for each stage of infant development.

Preferably, the range of products comprises two or more food products suitable for each stage of infant development. More preferably, the range of products comprises at least a vegetable based product and a fruit based product for each stage of infant development. More preferably, the range of products comprises a plurality of vegetable based products and fruit based products for each stage of infant development.

Preferably, the range of products comprises at least a vegetable based product and a fruit based product for stage 1 of infant development.

Preferably, the range of products comprises at least a vegetable based product, a complete meal and a fruit based product for stage 2 of infant development.

Preferably, the range of products comprises at least a vegetable based product, a complete meal and a fruit based product for stage 3 of infant development.

Preferably, the range of products comprises at least a vegetable based product, a complete meal and a fruit based product for stage 4 of infant development.

In a further aspect, an equipment suitable for producing a range of infant food products according to the invention is disclosed.

Preferably, the equipment comprises a cooker for cooking vegetables, a frier for frying meat or fish, a mixer, UHT apparatus, and apparatus for cold aseptic filling of aseptic containers with the food product wherein the UHT apparatus comprises tubing for moving food product from the mixer to the apparatus for cold aseptic filling and preferably a texturizer.

Preferably, the tube comprises a conduit annular in cross section for carrying out UHT treatment on food products having solid pieces (Stage 3 and Junior Stage products) or a plurality of conduits circular in cross-section for carrying out UHT treatment on homogenous food products (Stage 1 and Stage 2 products).

In other aspects, a range of products produced using the process of the invention and the product produced using the apparatus are disclosed.

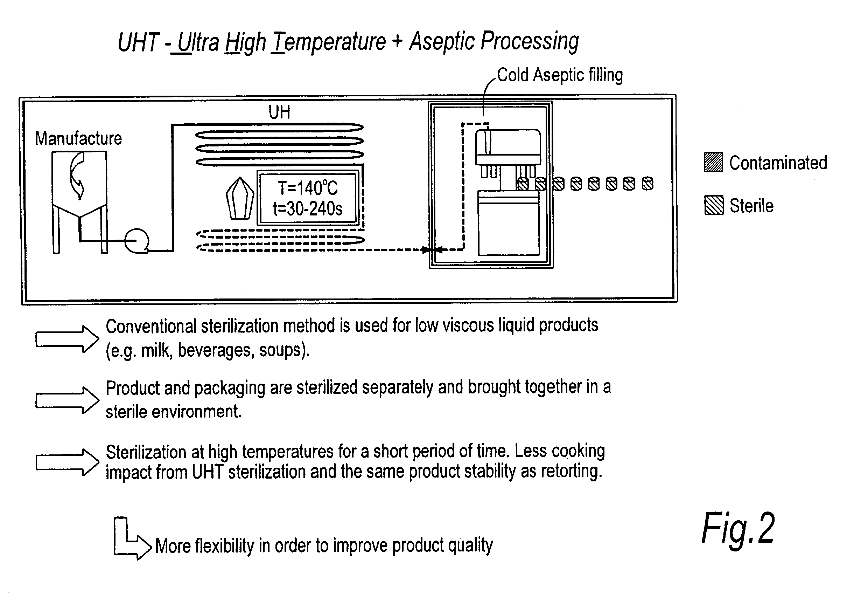

A traditional process for producing infant food products comprises sterilization of the product and packaging in glass jars. This is shown schematically in Figure 1. Compared to the known process, the process of the invention requires a lower overall heat treatment of the product to attain sterility. A process according to the invention is shown schematically in Figure 2. Without wishing to be bound by theory, it is thought that this results from the fact that the rate of increase in heat inactivation of micro-organisms (F-value) with the increase in temperature is greater than the rate of increase of cooking reactions. So that the F0 (sterility) is reached in a shorter period of time by a high rate of heating and final temperature, and the product will have received less total cooking than if the rate of heating is low and the F0 requires a long time to reach sterility. (The F0 value is a known measure of the time required to kill clostridium botulinum bacteria).

### EXAMPLES

This invention can be further illustrated by the following examples although it will be understood that these examples are not intended to limit the scope of the invention unless otherwise specifically indicated.

### Exemplary Food Products

### Example 1

The following ingredients were used to produce a Stage 2 complete meal.

### List of ingredients for stage 2 complete meal

| Ingredient | Amount per 100g (g) |
|---|---|
| POTATO FLAKES | 4.000 |
| CARROT | 30.000 |
| Lamb frozen | 8.500 |
| RICE SEMOLINA | 2.000 |
| Parsnip frozen | 5.000 |
| Sweetcorn frozen | 3.000 |
| RAPESEED OIL LOW ERUCIC (CANOLA) | 0.600 |
| SUNFLOWER OIL | 0.400 |
| Onion 10 mm frozen | 4.000 |
| WATER | 42.500 |

### Example 2

The following ingredients were used to produce a Stage 3 complete meal.

### List of ingredients for stage 3 complete meal

| Ingredient | Amount per 100g (g) |
|---|---|
| Pasta spaghetti short | 8.000 |
| Beef frozen | 8.000 |
| CARROT | 20.000 |
| Tomato puree | 5.000 |
| RAPESEED OIL LOW ERUCIC (CANOLA) | 0.800 |
| SUNFLOWER OIL | 0.400 |
| Bell pepper red 10mm frozen | 4.000 |
| Onion 10 mm frozen | 3.000 |
| Thyme frozen | 0.100 |
| WATER | 50.700 |

### Example 3

The following ingredients were used to produce a Junior Stage complete meal.

### List of ingredients for Junior Stage complete meal

| Ingredient | Amount per 100g (g) |
|---|---|
| Pasta spaghetti short | 8.000 |
| Beef frozen | 8.000 |
| CARROT | 20.000 |
| Tomato puree | 5.000 |
| RAPESEED OIL LOW ERUCIC (CANOLA) | 0.800 |
| SUNFLOWER OIL | 0.400 |
| Bell pepper red 10mm frozen | 4.000 |
| Onion 10 mm frozen | 3.000 |
| Thyme frozen | 0.100 |
| WATER | 50.700 |

### Tests and Data

In order to study the impact of the process of the invention on the quality of final products a number of studies have been carried out as follows.
1) Retention of thiamin (vitamin B1 - a key heat-sensitive nutrient).
2) Evaluation of the "cooking value" of retorting versus UHT processing Both of these tests demonstrate the lower destruction of ingredients/ nutrients in the products produced according to the invention.
3) Furan formation.
   This undesirable by-product of the cooking process can be demonstrated to be lower in the products produced according to the invention.
4) Retention of product colour.
   The thermal processing of a food product, to achieve sterility, often results in the degredation of the colour of key raw materials. This is a key visual quality parameter noted by the consumer.

### 1) Retention of Thiamin (Vitamin B1)

Using a heat-sensitive nutrient as a 'tracer' in the product to evaluate process losses is a well recognised methodology in food science. Thiamin (vitamin B1) was chosen as a key heat-sensitive nutrient for in-depth evaluation. Since the natural level of this nutrient is low in the final product the amounts used were fortified for the purpose of the test.

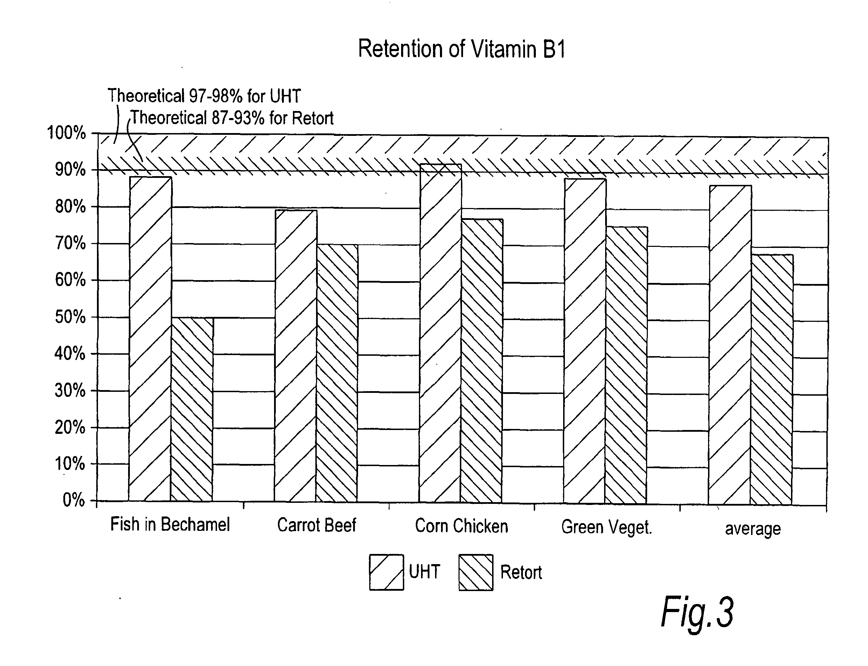

A study was carried out using four different product types. All products were fortified with levels of thiamin between 0.7 and 1 mg/ 100g. Each product was cooked by retorting in glass jars and by the process of the invention and then the resulting retention of thiamin compared. The results are shown in Figure 3.

The results show:
Average retention of thiamin post-retorting in glass jars was 67%.
Average retention of thiamin post-processing according to the invention was 89%.

Thus, it is clear that the process of the invention significantly reduced the losses of thiamin retaining 89% of the thiamin added to the products. Without wishing to be bound by theory, it is thought that this improved retention according to the invention is achieved because:
a) the process of the invention minimizes leaching of water-soluble vitamins, as occurs if the ingredients are cooked in excess water;
b) the destruction of the food matrix is limited i.e. it is a gentle process;
c) the heat treatment is significantly less using the process of the invnetion compared to conventional retorting;
d) The lower heat treatment in a process according to the invention compared to retorted products in glass jars, and the use of separate pre-cooking of the ingredients helps to preserve the water-soluble and heat-sensitive vitamins at a higher level and preserve more of the natural ingredient.

### 2) Evaluation of Cooking Value

Products can be evaluated for the effect of temperature and time (calculated cooking value- C value) on product quality parameters (e.g. texture, taste, colour, nutrient content) . Some degradation of quality parameters occurs with the achievement of process sterilization values (F0) during a thermal process. Products with a lower C-value have less destruction of their ingredients and nutrients and give a better appearance visually.

A study was carried out with a cod and mixed vegetable savoury meal to evaluate the impact of process conditions on the cooking value.

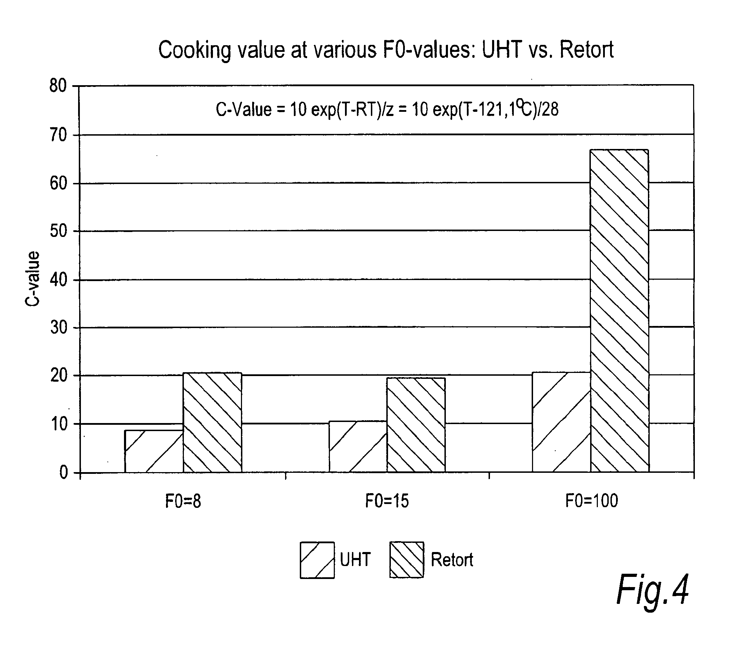

Figure 4, shows that at all three F0 (product sterility) values, retorting of the same product gave a higher C-value than processing according to the invention. In fact, at the highest sterilization value (F0= 100) the UHT-processed product has a significantly lower C-value than the same product cooked and sterilized by retorting. This demonstrates that over a wide range of sterilization conditions UHT processing provides is superior results to a similar process retorting.

### 3) Furans Formation

Furans are heterocyclic organic compounds derived from thermal decomposition of large aromatic molecules in food. They are typically measured as an example of the formation of advanced glycosylation end products (AGE's) in a food matrix. Long chain polyunsaturated fatty acids (LC-PUFAs) and vitamin C are key precursors of furans in dry and aqueous food systems. The furan compounds formed in foods vary widely in their toxicity but in general they are known to impair growth and development (especially the immune and nervous system) and may, over time, lead to cancer. Thus, foods having low furan concentrations are desired. Measurement of the formation of furans during processing according to the invention was therefore used as a marker for over-processing and the formation of AGEs.

A study was carried out to observe the effect of processing on fish oil (a rich source of LC-PUFAs) and vitamin C added into the matrix of the product. The aim of the study was to measure the amount of furan formed during processing of a food product.

The product used in the study was a vegetable and veal savoury meal with/ without added fish oil and vitamin C.

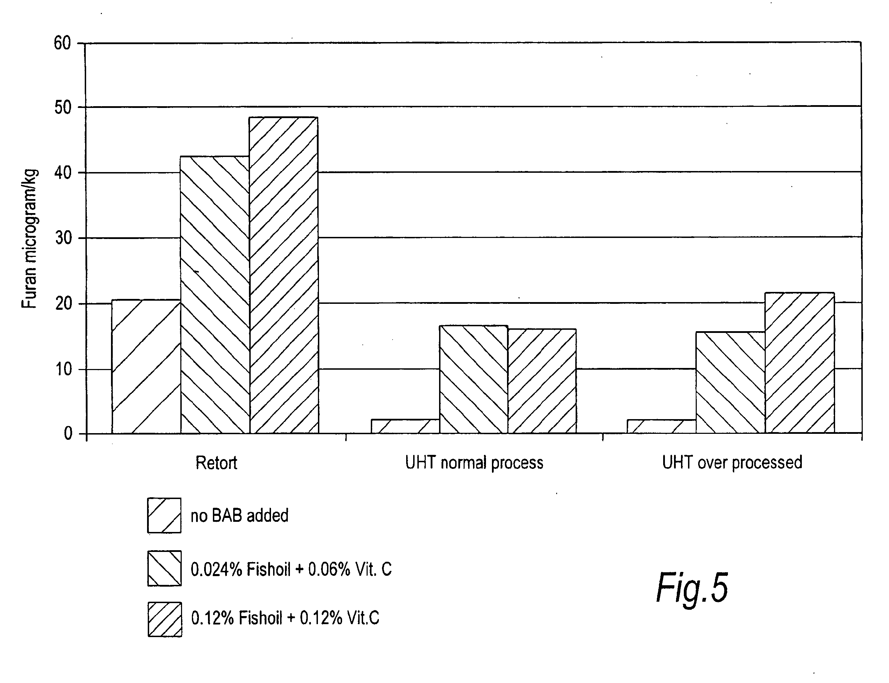

Figure 5 shows the level of furan measured in each of the three products after subjecting the product to thermal processing involving conventional retorting and processing according to the invention.

Remarkably, even when the process of the invention was used to "overprocess" the food product by carrying out UHT treatment for an extended period, furan production was reduced compared to a similar product produced by retorting. The results show that the addition of fish oil and vitamin C resulted in higher levels of furans being produced but this effect was not dose-dependent.

For comparison, a food product having the same ingredients as a food product produced according to the invention was processed by retorting. This resulted in a food product having increased furan concentrations, with a 100 % increase in production following the addition of fish oil, and a further small increase at a higher level of fish oil addition.

To study the effect of over-processing further a second study was carried out.

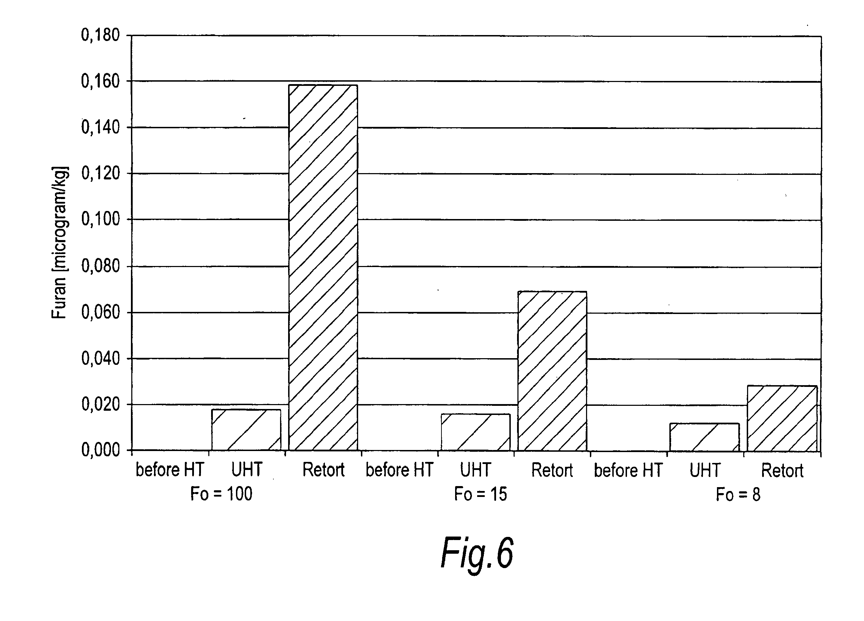

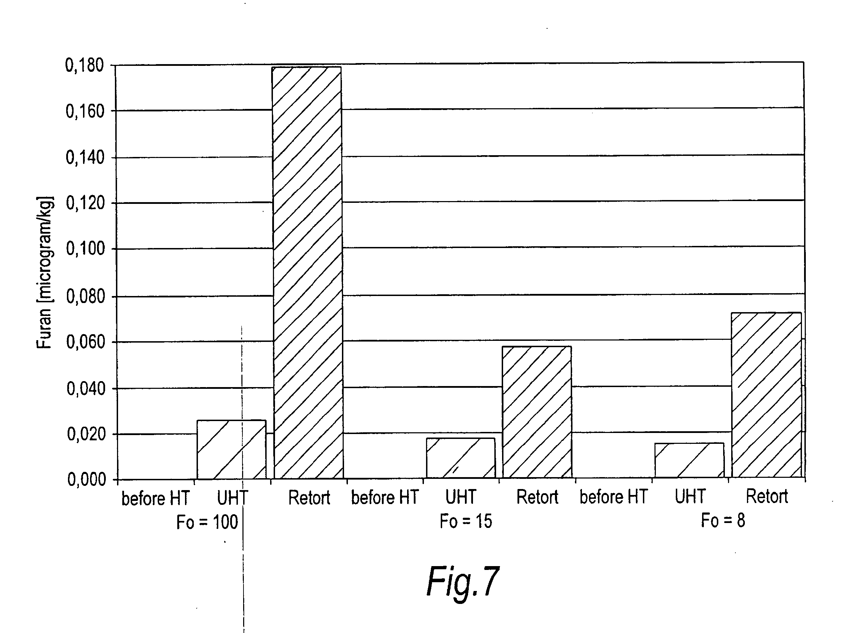

A vegetable product including carrots and a savoury product including cod and mixed vegetables were evaluated for furans at three levels of heat treatment. The results are shown in Figures 6 and 7 respectively.

In the first test, the food product was processed by retorting at high sterilization conditions - highest sterilization treatment (in the figure this is represented by F0=100).

In the second test, the food product was processed by retorting at intermediate sterilization conditions - intermediate sterilization (in the figure this is represented by F0=15).

In the third test, the food product was processed by retorting at low sterilization conditions - lowest sterilization treatment (in the figure this is represented by F0=8).

For direct comparison, products having the same ingredients were processed according to the invention and the temperature for UHT treatment was varied.

The results showed that:
a) Processing the food product by retorting to an F0=100 resulted in a high level of furan in both the vegetable and the savoury products. This level of F0 is not typical (typical values are between F0=8 and F0=15) but was used to test the products under extreme conditions to measure furan formation;
b) As indicated in Figures 6 & 7, only low levels of furans were developed following processing according to the invention at both F0=8 and 15.
c) In all tests, the savoury meal had higher levels of furan after processing than the vegetable recipe (possibly due to the presence of naturally occurring LC-PUFAs), but these differences were small compared to the effect of heat treatment on the product as shown by the comparisons between a food product processed by retorting versus a food product having the same ingredients produced according to the invention.

### 4) Product colour retention.

Some of the key raw materials in food products are vegetables (and fruits) which are naturally brightly coloured. The existence of these colours in the final product is an indication to a consumer that the product is of a high quality. In view of this, there is a need for products that retain the natural colour of the ingredients after processing.

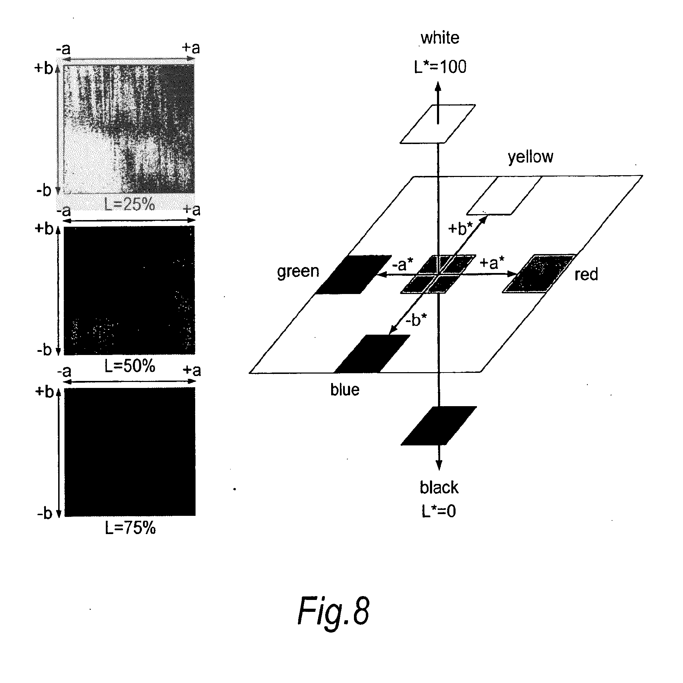

A study was carried out on a range of savoury meal products to evaluate the impact of thermal processing on colour. The trimulus colour parameters L, a and b were recorded using a Color Sphere, as indicators of the product colour characteristic. The products were evaluated before processing and then after both retorting and processing according to the invention. Figure 8 shows the results obtained in a Lab color space diagram.

The following table shows the results in numeric form of the impact on colour after processing. "Before HT" shows the values obtained before heat treatment. "UHT" shows the values obtained after processing according to the invention and "Retort" shows the values obtained after processing the product by conventional retorting.

| **Carrots** | | | |
|---|---|---|---|
| | **before HT** | **UHT** | **Retort** |
| L | 30,47 | 27,03 | 25,61 |
| a | 21,62 | 19,42 | 18,59 |
| b | 45,2 | 42,34 | 41,23 |
| | | 24,9 | 48,6 |
| Delta E | ø | 5,0 | 7,0 |

| **Carrots with Beef** | | | |
|---|---|---|---|
| | **before HT** | **UHT** | **Retort** |
| L | 46,19 | 46,91 | 47,5 |
| a | 22,74 | 21,98 | 20,89 |
| b | 28,32 | 28,82 | 29,11 |
| | | 1,3 | 5,8 |
| Delta E | ø | 1,2 | 2.4 |

| **Peas** | | | | |
|---|---|---|---|---|
| | **before HT** | **UHT 125°C, 45s** | **Retort** | **UHT 145°C, 45s** |
| L | 54,09 | 53,81 | 54,08 | 54 |
| a | -14,63 | -6,31 | -1,36 | -3 |
| b | 43,79 | 41,8 | 41,78 | 41,27 |
| | | 73,3 | 180,1 | 141,6 |
| Delta E | ø | 8,6 | 13,4 | 11,9 |

| **Turkey with Rice Zucchini** | | | |
|---|---|---|---|
| **before HT** | **before HT** | **UHT** | **Retort** |
| L | 53,16 | 52,85 | 52,2 |
| a | 0,16 | 1,74 | 3,88 |
| b | 18,57 | 19,37 | 19,14 |
| | | 3,2 | 15,1 |
| Delta E | ø | 1,8 | 3,9 |

The total Hunter colour difference Delta E which combines L, a and b is commonly used to compare the overall colour difference between two products. The colour difference Delta E before and after heat treatment was higher for the products processed by conventional retorting than for all products having the same ingredients produced by processing according to the invention.

This clearly demonstrates that products were found to retain their natural colour better following processing according to the invention compared to products having the same ingredients, but processed by conventional retorting.

### 5) Taste

The high levels of heat treatment required by retorting food products leads to an increase in Maillard reactions with the development of more intense 'meaty' flavours. However, prolonged cooking can also develop complex chemical compounds with bitter or sour tastes. Tastes referred to as "off-notes" (eg a canned food taste) can develop. For example, vegetables can develop a rancid off-taste by the activity of lipoxygenase which is suppressed by freezing.

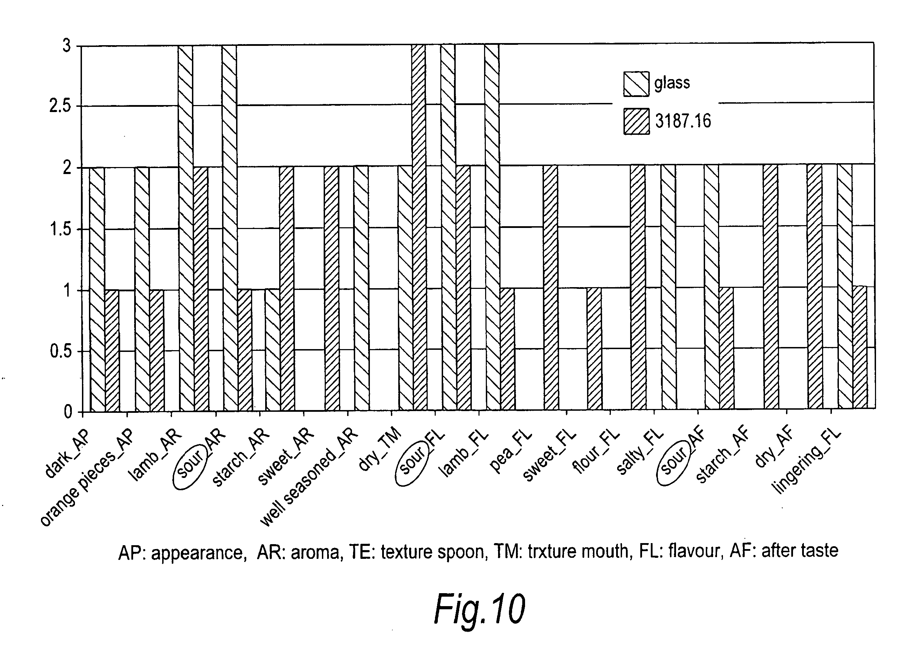

Sensory analysis of food products processed according to the invention compared to food products produced using the same ingredients, but processed by conventional retorting demonstrates specific taste differences. The test results of sensory profiling are shown in Figure 10. The results show the differences in the sensory profiles between a retorted product comprising lamb, green vegetables and potato and product produced according to the invention having the same ingredients.

In summary, the results of the sensory analysis show:

### ▪ Product processed according to the invention:

- aroma: more starch-like, more sweet
- texture mouth: more dry
- flavour: more pea-like, more sweet, more flour-like
- after taste: more starch-like, more dry

### ▪ Product processed by conventional retorting:

- appearance: more dark , more orange pieces
- aroma: more lamb-like, **more sour,** more well-seasoned
- flavour: **more sour,** more lamb-like, more salty
- after taste: **more sour,** more lingering

## Claims

1. A process for producing an infant food product comprising a protein ingredient and a vegetable ingredient wherein, in a first stage, a vegetable ingredient is cooked, and a protein ingredient is cooked separately from the vegetable ingredient to provide precooked ingredients, and in a second stage, the pre-cooked ingredients are mixed and, after mixing, are submitted to UHT processing to sterilize the product, which product is aseptically filled in containers thereafter.

2. A process according to claim 1 wherein the UHT processing is carried out at a temperature of about 130°C to about 140°C for a time of about 30 seconds to about 240 seconds.

3. A process according to claim 1 or 2 wherein the vegetable ingredient comprises at least one, vegetable, optionally comprising at least two or three vegetables.

4. A process according to any preceding claim wherein separate cooking of the vegetable ingredient is achieved by subjecting frozen or fresh vegetables to steam treatment.

5. A process according to any preceding claim wherein at least two varieties of vegetables are cooked separately from each other and mixed after cooking.

6. A process according to any preceding claim wherein the vegetables are cooked for a time of about 1 minute to about 5 minutes at about 85 °C to about 95 °C.

7. A process according to any preceding claim wherein the protein ingredient comprises a source of protein selected from meat and fish; optionally wherein the meat or fish is cooked separately by frying it or pressure-cooking it for a time of about 10 minutes.

8. A process according to any preceding claim, wherein in the first stage a pasta or a cereal based ingredient, eg rice, is cooked separately from the vegetable ingredient and the protein ingredient, and in a second stage it is mixed with the pre-cooked ingredients.

9. A process according to any of claims 1 to 8, wherein the infant food products for infants from about 4 to about 6 months of age (Stage 1) comprise
(a) one or more vegetables selected from artichoke, carrot, cucumber, fennel, French bean, leek, lettuce, parsnip, potato, pumpkin, squash and zucchini, and/or
(b) legume soy, and/or
(c) one or more meats selected from beef, veal, chicken, lamb, pork, turkey and duck; and/or
(d) one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant and watermelon, and/or
(e) one or more aromatic herbs and spices selected from anise, balm mint, chamomile, caraway, gherkin, orange blossom and sorrel.

10. A process according to any of claims 1 to 8, wherein the infant food products for infants from about 6 to about 8 months of age (Stage 2) comprise
(a) one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea and spinach, and/or
(b) one or more legumes selected from soy, black gram seed, chickpea, cowpea, kidney bean, lentil, mung bean and pigeon pea, and/or
(c) one or more meats selected from of beef, veal, chicken, lamb, pork, turkey and duck, and/or fish, and/or
(d) one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry and tangerine, and/or
(e) one or more aromatic herbs and spices selected from anise, balm mint, chamomile, caraway, gherkin, orange blossom, sorrel, cardamom, chives, cumin, onion, saffron, savory, shallot and thyme, and/or
(f) coconut.

11. A process according to any of claims 1 to 8, wherein the infant food products for infants from about 8 to about 12 months of age (Stage 3) comprise
(a) one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish and turnip, and/or
(b) one or more legumes selected from soy, black gram seed, chickpea, cowpea, kidney bean, lentil, mung bean, pigeon pea, lima bean and winged bean, and/or
(c) one or more meats selected from beef, veal, chicken, lamb, pork, turkey and duck, and/or fish and/or eggs, and/or
(d) one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine and rhubarb, and/or
(e) one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint and vanilla, and/or
(f) coconut and/or cocoa.

12. A process according to any of claims 1 to 8, wherein the infant food products for infants from about 12 to about 36 months of age (Stage Junior) comprise
(a) one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish, turnip, mushroom and watercress, and/or
(b) one or more legumes selected from soy, black gram seed, chickpea, cowpea, kidney bean, lentil, mung bean, pigeon pea, lima bean and winged bean, and/or
(c) one or more meats selected from beef, veal, chicken, lamb, pork, turkey, duck, and/or fish, and/or eggs and/or crustaceans; and/or
(d) one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine, rhubarb, grapefruit and kiwi; and/or
(e) one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint, vanilla, basil, bay laurel, chervil, cinnamon, clove, ginger, liquorice, mace, marjoram, nutmeg, oregano, parsley, pepper, rosemary, sage and terragon; and/or
(f) one or more nuts selected from coconut, cocoa, almond, beechnut, brazil nut, cashew nut, chestnut, hazelnut, macadamia nut, pecan nut, pistachio nut and walnut.

13. A process according to any preceding claim wherein the process includes sterilizing packaging for the food product and filling the packaging with the food product under an aseptic environment; optionally wherein the packaging comprises plastics containers and/or polypropylene containers.

14. A process according to claim 13 wherein the food product and the packaging containers for the food product are produced in the same production line so that the production of the containers for the food product is an integral part of the process.

## Patentansprüche

1. Verfahren zur Herstellung eines Kindernahrungsproduktes mit einem Eiweißbestandteil und einem pflanzlichen Bestandteil, wobei in einer ersten Stufe ein pflanzlicher Bestandteil gegart wird und ein Eiweißbestandteil getrennt von dem pflanzlichen Bestandteil gegart wird, um vorgegarte Bestandteile bereitzustellen, und in einer zweiten Stufe die vorgegarten Bestandteile vermischt werden und nach dem Vermischen einer UHT-Weiterverarbeitung unterzogen werden, um das Produkt zu sterilisieren, welches anschließend keimfrei in Behälter abgefüllt wird.

2. Verfahren gemäß Anspruch 1, wobei die UHT-Weiterverarbeitung bei einer Temperatur von ca. 130°C bis ca. 140°C über einen Zeitraum von ca. 30 Sekunden bis ca. 240 Sekunden durchgeführt wird.

3. Verfahren gemäß Anspruch 1 oder 2, wobei der pflanzliche Bestandteil mindestens eine Gemüsesorte, wahlweise mindestens zwei oder drei Gemüsesorten umfasst.

4. Verfahren gemäß einem vorhergehenden Anspruch, wobei ein getrenntes Garen des pflanzlichen Bestandteils dadurch erzielt wird, dass gefrorene oder frische Gemüsesorten einer Dampfbehandlung unterzogen werden.

5. Verfahren gemäß einem vorhergehenden Anspruch, wobei mindestens zwei Arten von Gemüse getrennt voneinander gegart und nach dem Garen vermischt werden.

6. Verfahren gemäß einem vorhergehenden Anspruch, wobei die Gemüsesorten über einen Zeitraum von ca. 1 Minute bis ca. 5 Minuten bei ca. 85°C bis ca. 95°C gegart werden.

7. Verfahren gemäß einem vorhergehenden Anspruch, wobei der Eiweißbestandteil eine Eiweißquelle ausgewählt aus Fleisch und Fisch umfasst; wahlweise wobei das Fleisch oder der Fisch getrennt gegart wird, indem es/er über einen Zeitraum von ca. 10 Minuten gebraten oder dampfgegart wird.

8. Verfahren gemäß einem vorhergehenden Anspruch, wobei in der ersten Stufe ein Pastabestandteil oder Bestandteil auf Getreidebasis, z.B. Reis, getrennt von dem pflanzlichen Bestandteil und dem Eiweißbestandteil gekocht wird und in einer zweiten Stufe mit den vorgegarten Bestandteilen vermischt wird.

9. Verfahren gemäß einem der Ansprüche 1 bis 8, wobei die Kindernahrungsprodukte für Kleinkinder im Alter von ca. 4 bis ca. 6 Monaten (Stufe 1) Folgendes umfassen:
(a) eine oder mehrere Gemüsesorten ausgewählt aus Artischocke, Karotte, Gurke, Fenchel, Gartenbohnen, Lauch, Salat, Pastinake, Kartoffel, Kürbispflanze und Zucchini, und/oder
(b) die Hülsenfrucht Soja, und/oder
(c) eine oder mehrere Fleischsorten ausgewählt aus Rind, Kalb, Hähnchen, Lamm, Schwein, Truthahn und Ente; und/oder
(d) eine oder mehrere Obstsorten ausgewählt aus Apfel, Aprikose, Banane, Brombeere, schwarze Johannisbeere, Heidelbeere, Kirsche, Dattel, Traube, Stachelbeere, Guave, Zitrone, Limone, Mandarine, Mango, Melone, Nektarine, Olive, Orange, Pfirsich, Birne, Ananas, Pflaume, Quitte, Himbeere, rote Johannisbeere und Wassermelone, und/oder
(e) ein oder mehrere aromatische Kräuter und Gewürze ausgewählt aus Anis, Zitronenmelisse, Kamille, Kümmel, Gewürzgurke, Orangenblüte und Sauerampfer.

10. Verfahren gemäß einem der Ansprüche 1 bis 8, wobei die Kindernahrungsprodukte für Kleinkinder im Alter von ca. 6 bis ca. 8 Monaten (Stufe 2) Folgendes umfassen:
(a) eine oder mehrere Gemüsesorten ausgewählt aus Artischocke, Karotte, Gurke, Fenchel, Gartenbohne, Lauch, Salat, Pastinake, Kartoffel, Kürbispflanze, Zucchini, Broccoli, Blumenkohl, Aubergine, Süßkartoffel, Tomate, Erbse und Spinat, und/oder
(b) eine oder mehrere Hülsenfrüchte ausgewählt aus Soja, schwarzen Linsen, Kichererbsen, Langbohnen, Kidneybohnen, Linsen, Mungbohnen und Straucherbsen, und/oder
(c) eine oder mehrere Fleischsorten ausgewählt aus Rind, Kalb, Hähnchen, Lamm, Schwein, Truthahn und Ente, und/oder Fisch, und/oder
(d) eine oder mehrere Obstsorten ausgewählt aus Apfel, Aprikose, Banane, Brombeere, schwarze Johannisbeere, Heidelbeere, Kirsche, Dattel, Traube, Stachelbeere, Guave, Zitrone, Limone, Mandarine, Mango, Melone, Nektarine, Olive, Orange, Pfirsich, Birne, Ananas, Pflaume, Quitte, Himbeere, rote Johannisbeere, Wassermelone, Feige, Papaya, Passionsfrucht, Erdbeere und Tangerine, und/oder
(e) ein oder mehrere aromatische Kräuter und Gewürze ausgewählt aus Anis, Zitronenmelisse, Kamille, Kümmel, Gewürzgurke, Orangenblüte, Sauerklee, Kardamom, Schnittlauch, Kreuzkümmel, Zwiebel, Safran, Bohnenkraut, Schalotte und Thymian, und/oder
(f) Kokosnuss.

11. Verfahren gemäß einem der Ansprüche 1 bis 8, wobei die Kindernahrungsprodukte für Kleinkinder im Alter von ca. 8 bis ca. 12 Monaten (Stufe 3) Folgendes umfassen:
(a) eine oder mehrere Gemüsesorten ausgewählt aus Artischocke, Karotte, Gurke, Fenchel, Gartenbohne, Lauch, Salat, Pastinake, Kartoffel, Kürbispflanze, Zucchini, Broccoli, Blumenkohl, Aubergine, Süßkartoffel, Tomate, Erbse, Spinat, Spargel, Zuckerrübe, Rosenkohl, Weißkohl, Gartenerbse, Rettich und weißer Rübe, und/oder
(b) eine oder mehrere Hülsenfrüchte ausgewählt aus Soja, schwarzen Linsen, Kichererbsen, Langbohnen, Kidneybohnen, Linsen, Mungbohnen, Straucherbsen, Limabohnen und Goabohnen, und/oder
(c) eine oder mehrere Fleischsorten ausgewählt aus Rind, Kalb, Hähnchen, Lamm, Schwein, Truthahn und Ente, und/oder Fisch und/oder Eiern, und/oder
(d) eine oder mehrere Obstsorten ausgewählt aus Apfel, Aprikose, Banane, Brombeere, schwarze Johannisbeere, Heidelbeere, Kirsche, Dattel, Traube, Stachelbeere, Guave, Zitrone, Limone, Mandarine, Mango, Melone, Nektarine, Olive, Orange, Pfirsich, Birne, Ananas, Pflaume, Quitte, Himbeere, rote Johannisbeere, Wassermelone, Feige, Papaya, Passionsfrucht, Erdbeere, Tangerine und Rhabarber, und/oder
(e) ein oder mehrere aromatische Kräuter und Gewürze ausgewählt aus Anis, Zitronenmelisse, Kamille, Kümmel, Gewürzgurke, Orangenblüte, Sauerklee, Kardamom, Schnittlauch, Kreuzkümmel, Zwiebel, Safran, Bohnenkraut, Schalotte, Thymian, Koriander, Kurkuma, Sauerampfer, Knoblauch, Minze und Vanille, und/oder
(f) Kokosnuss und/oder Kakao.

12. Verfahren gemäß einem der Ansprüche 1 bis 8, wobei die Kindernahrungsprodukte für Kleinkinder im Alter von ca. 12 bis ca. 36 Monaten (Junior-Stufe) Folgendes umfassen:
(a) eine oder mehrere Gemüsesorten ausgewählt aus Artischocke, Karotte, Gurke, Fenchel, Gartenbohne, Lauch, Salat, Pastinake, Kartoffel, Kürbispflanze, Zucchini, Broccoli, Blumenkohl, Aubergine, Süßkartoffel, Tomate, Erbse, Spinat, Spargel, Zuckerrübe, Rosenkohl, Weißkohl, Gartenerbse, Rettich, weiße Rübe, Pilzen und Brunnenkresse, und/oder
(b) eine oder mehrere Hülsenfrüchte ausgewählt aus Soja, schwarzen Linsen, Kichererbsen, Langbohnen, Kidneybohnen, Linsen, Mungbohnen, Straucherbsen, Limabohnen und Goabohnen, und/oder
(c) eine oder mehrere Fleischsorten ausgewählt aus Rind, Kalb, Hähnchen, Lamm, Schwein, Truthahn, Ente, und/oder Fisch und/oder Eiern und/oder Krustentieren; und/oder
(d) eine oder mehrere Obstsorten ausgewählt aus Apfel, Aprikose, Banane, Brombeere, schwarze Johannisbeere, Heidelbeere, Kirsche, Dattel, Traube, Stachelbeere, Guave, Zitrone, Limone, Mandarine, Mango, Melone, Nektarine, Olive, Orange, Pfirsich, Birne, Ananas, Pflaume, Quitte, Himbeere, rote Johannisbeere, Wassermelone, Feige, Papaya, Passionsfrucht, Erdbeere, Tangerine, Rhabarber, Grapefruit und Kiwi; und/oder
(e) ein oder mehrere aromatische Kräuter und Gewürze ausgewählt aus Anis, Zitronenmelisse, Kamille, Kümmel, Gewürzgurke, Orangenblüte, Sauerklee, Kardamom, Schnittlauch, Kreuzkümmel, Zwiebel, Safran, Bohnenkraut, Schalotte, Thymian, Koriander, Kurkuma, Sauerampfer, Knoblauch, Minze, Vanille, Basilikum, Lorbeer, Kerbel, Zimt, Nelke, Ingwer, Süßholz, Muskatblüte, Majoran, Muskatnuss, Oregano, Petersilie, Paprika, Rosmarin, Salbei und Estragon; und/oder
(f) eine oder mehrere Nüsse ausgewählt aus Kokosnuss, Kakao, Mandel, Buchecker, Paranuss, Cashewnuss, Esskastanie, Haselnuss, Macadamianuss, Pecannuss, Pistazie und Walnuss.

13. Verfahren gemäß einem vorhergehenden Anspruch, wobei das Verfahren das Sterilisieren der Verpackung für das Nahrungsmittelprodukt und das Befüllen der Verpackung mit dem Nahrungsmittelprodukt in keimfreier Umgebung umfasst; wahlweise wobei die Verpackung Kunststoffbehälter und/oder Polypropylenbehälter umfasst.

14. Verfahren gemäß Anspruch 13, wobei das Nahrungsmittelprodukt und die Verpackungsbehälter für das Nahrungsmittelprodukt in ein und derselben Produktionsanlage hergestellt werden, so dass die Herstellung der Behälter für das Nahrungsmittelprodukt ein integraler Bestandteil des Verfahrens ist.

## Revendications

1. Procédé de production d'un produit alimentaire pour enfant en bas âge, comprenant un ingrédient protéine et un ingrédient légume, dans lequel, dans une première étape, un ingrédient légume est cuit et un ingrédient protéine est cuit séparément de l'ingrédient légume afin de fournir des ingrédients précuits, et dans une deuxième étape, les ingrédients précuits sont mélangés et, après mélange, sont soumis à un traitement UHT afin de stériliser le produit, lequel produit est rempli aseptiquement dans des récipients par la suite.

2. Procédé selon la revendication 1, dans lequel le traitement UHT est réalisé à une température d'environ 130°C à environ 140°C pendant une durée d'environ 30 secondes à environ 240 secondes.

3. Procédé selon la revendication 1 ou 2, dans lequel l'ingrédient légume comprend au moins un légume, facultativement comprend au moins deux ou trois légumes.

4. Procédé selon l'une quelconque des revendications précédentes, dans lequel une cuisson séparée de l'ingrédient légume est réalisée en soumettant des légumes congelés ou frais à un traitement vapeur.

5. Procédé selon l'une quelconque des revendications précédentes, dans lequel au moins deux variétés de légumes sont cuites séparément l'une de l'autre et mélangées après cuisson.

6. Procédé selon l'une quelconque des revendications précédentes, dans lequel les légumes sont cuits pendant une durée d'environ 1 minute à environ 5 minutes à une température d'environ 85°C à environ 95°C.

7. Procédé selon l'une quelconque des revendications précédentes, dans lequel l'ingrédient protéine comprend une source de protéine choisie parmi la viande et le poisson ; facultativement dans lequel la viande ou le poisson est cuit(e) séparément par friture ou par cuisson vapeur pendant une durée d'environ 10 minutes.

8. Procédé selon l'une quelconque des revendications précédentes, dans lequel dans la première étape, une pâte ou un ingrédient à base de céréale, par exemple du riz, est cuit(e) séparément de l'ingrédient légume et de l'ingrédient protéine et dans une deuxième étape, elle/il est mélangé(e) aux ingrédients précuits.

9. Procédé selon l'une quelconque des revendications 1 à 8, dans lequel les produits alimentaires pour enfant en bas âge destinés aux enfants d'environ 4 à environ 6 mois (stade 1) comprennent
(a) un au plusieurs légumes choisis parmi l'artichaut, la carotte, le concombre, le fenouil, le haricot vert, le poireau, la laitue, le panais, la pomme de terre, la citrouille, la courge et la courgette, et/ou
(b) légumineuse soja, et/ou
(c) une au plusieurs viandes choisies parmi le boeuf, le veau, le poulet, l'agneau, le porc, la dinde et le canard ; et/ou
(d) un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pèche, la poire, l'ananas, la prune, le coing, la framboise, la groseille et la pastèque, et/ou
(e) une ou plusieurs herbes aromatiques et épices choisies parmi l'anis, la menthe baume, la camomille, le carvi, le cornichon, la fleur d'oranger et l'oseille.

10. Procédé selon l'une quelconque des revendications 1 à 8, dans lequel les produits alimentaires pour enfant en bas âge destinés aux enfants d'environ 6 à environ 8 mois (stade 2) comprennent
(a) un ou plusieurs légumes choisis parmi l'artichaut, la carotte, le concombre, le fenouil, le haricot vert, le poireau, la laitue, le panais, la pomme de terre, la citrouille, la courge, la courgette, le brocoli, le chou-fleur, l'aubergine, la patate douce, la tomate, le petit pois et l'épinard, et/ou
(b) un ou plusieurs légumes choisis parmi le soja, le haricot urd, le pois chiche, les doliques, le haricot sec, la lentille, le haricot mungo et le pois cajan, et/ou
(c) une ou plusieurs viandes choisies parmi le boeuf, le veau, le poulet, l'agneau, le porc, la dinde et le canard, et/ou le poisson, et/ou
(d) un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pèche, la poire, l'ananas, la prune, le coing, la framboise, la groseille, la pastèque, la figue, la papaye, le fruit de la passion, la fraise et la clémentine, et/ou
(e) une ou plusieurs herbes aromatiques et épices choisies parmi l'anis, la menthe baume, la camomille, le carvi, le cornichon, la fleur d'oranger, l'oseille, la cardamome, la ciboulette, le cumin, l'oignon, le safran, la sarriette, l'échalote et le thym, et/ou
(f) de la noix de coco.

11. Procédé selon l'une quelconque des revendications 1 à 8, dans lequel les produits alimentaires pour enfant en bas âge destinés aux enfants d'environ 8 à environ 12 mois (stade 3) comprennent
(a) un ou plusieurs légumes choisis parmi l'artichaut, la carotte, le concombre, le fenouil, le haricot vert, le poireau, la laitue, le panais, la pomme de terre, la citrouille, la courge, la courgette, le brocoli, le chou-fleur, l'aubergine, la patate douce, la tomate, le petit pois, l'épinard, l'asperge, la betterave (rouge), le chou de Bruxelles, le chou, le pois, le radis et le rutabaga, et/ou
(b) un ou plusieurs légumes choisis parmi le soja, le haricot urd, le pois chiche, les doliques, le haricot sec, la lentille, le haricot mungo, le pois cajan, le haricot de Lima et le pois carré, et/ou
(c) une ou plusieurs viandes choisies parmi le boeuf, le veau, le poulet, l'agneau, le porc, la dinde et le canard, et/ou le poisson et/ou l'oeuf, et/ou
(d) un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pèche, la poire, l'ananas, la prune, le coing, la framboise, la groseille, la pastèque, la figue, la papaye, le fruit de la passion, la fraise, la clémentine et la rhubarbe, et/ou
(e) une au plusieurs herbes aromatiques et épices choisies parmi l'anis, la menthe baume, la camomille, le carvi, le cornichon, la fleur d'oranger, l'oseille, la cardamome, la ciboulette, le cumin, l'oignon, le safran, la sarriette, l'échalote, le thym, le coriandre, le curcuma, l'oseille, l'ail, la menthe et la vanille, et/ou
(f) de la noix de coco et/ou du cacao.

12. Procédé selon l'une quelconque des revendications 1 à 8, dans lequel les produits alimentaires pour enfant en bas âge destinés aux enfants d'environ 12 à environ 36 mois (stade junior) comprennent
(a) un au plusieurs légumes choisis parmi l'artichaut, la carotte, le concombre, le fenouil, le haricot vert, le poireau, la laitue, le panais, la pomme de terre, la citrouille, la courge, la courgette, le brocoli, le chou-fleur, l'aubergine, la patate douce, la tomate, le petit pois, l'épinard, l'asperge, la betterave (rouge), le chou de Bruxelles, le chou, le pois, le radis, le rutabaga, le champignon et le cresson, et/ou
(b) un ou plusieurs légumes choisis parmi le soja, le haricot urd, le pois chiche, les doliques, le haricot sec, la lentille, le haricot mungo, le pois cajan, le haricot de Lima et le pois carré, et/ou
(c) une ou plusieurs viandes choisies parmi le boeuf, le veau, le poulet, l'agneau, le porc, la dinde et le canard, et/ou le poisson et/ou l'oeuf et/ou les crustacés ; et/ou
(d) un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pèche, la poire, l'ananas, la prune, le coing, la framboise, la groseille, la pastèque, la figue, la papaye, le fruit de la passion, la fraise, la clémentine, la rhubarbe, le pamplemousse et le kiwi ; et/ou
(e) une ou plusieurs herbes aromatiques et épices choisies parmi l'anis, la menthe baume, la camomille, le carvi, le cornichon, la fleur d'oranger, l'oseille, la cardamome, la ciboulette, le cumin, l'oignon, le safran, la sarriette, l'échalote, le thym, le coriandre, le curcuma, l'oseille, l'ail, la menthe, la vanille, le basilique, le laurier, le cerfeuil, la cannelle, le clou de girofle, le gingembre, la réglisse, le macis, la marjolaine, la noix de muscade, l'origan, le persil, le poivre, le romarin, la sauge et l'estragon ; et/ou
(f) un au plusieurs fruits à coque choisis parmi la noix de coco, le cacao, l'amande, la faine, la noix du Brésil, la noix de cajou, le marron, la noisette, la noix de macadamia, la noix de pécan, la pistache et la noix.

13. Procédé selon l'une quelconque des revendications précédentes, le procédé comprenant une stérilisation de l'emballage pour le produit alimentaire et un remplissage de l'emballage avec le produit alimentaire dans un environnement aseptique ; facultativement dans lequel l'emballage comprend des récipients en plastique et/ou des récipients en polypropylène.

14. Procédé selon la revendication 13, dans lequel le produit alimentaire et les récipients d'emballage pour le produit alimentaire sont produits sur la même ligne de production de sorte que la production des récipients pour le produit alimentaire fait partie intégrante du processus.
